# EUROPEAN PATENT APPLICATION

(11) **EP 1 632 987 A2**
(43) Date of publication of application: **08.03.2006**
(21) Application number: 05016209.8
(22) Date of filing: 26.07.2005
(51) Int. Cl.: H01K 1/30, H01K 1/34, H01K 7/02, F21V 7/00, F21V 5/00

(54) **Halogen par lamp with enhanced light output**

(30) Priority: 27.08.2004 US 928974
(71) Applicant: OSRAM-SYLVANIA INC., 01923 Danvers, MA (US)
(72) Inventor: Kling, Michael R., 40509 Lexington KY (US); Oetken, James E., Winchester 40391 KY (US)
(74) Representative: Pokorny, Gerd

(57) **Abstract**

A PAR lamp (10) having a tungsten halogen capsule (12) mounted in a hard glass, pressed reflector (14). A hard glass lens (16) is bonded to the envelope (14) by an adhesive such as epoxy or silicone. More specifically, the envelope (14) defines a cavity (18) having a base (20) and an opening (22) defined by an edge (24), the opening (22) being opposite the base (20). The capsule (12) is mounted in the base (20) and contains a filament (26) that is designed for operation at greater than 2700K. The lens (16) is preferably a borosilicate glass and contains between 0.3 and 5 weight percent neodymium.

## Description

**TECHNICAL FIELD**

This invention relates to lamps and more particularly to reflector lamps. Still more particularly it relates to tungsten halogen PAR lamps having an enhanced light output in the red and blue regions of the spectrum.

**BACKGROUND ART**

Various doping agents have been employed for many years to correct or control the color output of electric lamps. One agent that has been used with some success is neodymium oxide. For example, U.S. Patent No. 4,315,186 ('186) describes a sealed beam incandescent reflector lamp that a neodymium-doped glass lens flame sealed to a glass reflector. The lens of the '186 lamp is coated with an infrared refective film to reduce the lens temperature and prevent excessive outgassing. U.S. Patent No. 5,548, 491 describes an automotive headlamp, which uses a neodymium containing front lens to enhance contrast and reduce glare. Patent No. 6,358,873 describes an aluminosilicate glass tubing that contains neodymium oxide and that can be used to manufacture tungsten halogen capsules that operate with increased correlated color temperature.

The appearance of neodymium oxide doped glass and the effect on the transmitted light spectrum is highly dependent on the spectral power distribution of the illumination source. Typical incandescent lamps have a coil or filament temperature of about 2700K with very little emission in the blue region of the spectrum. It has been found that the correlated color temperature of such light will not be increased by the use of a glass envelope or lens containing neodymium oxide. However, while it is known that light sources with ample blue content can experience a significant color temperature increase when neodymium oxide is present in the glass envelope or lens, such results have previously been achieved with high cost or difficult manufacturing techniques.

**DISCLOSURE OF INVENTION**

It is, therefore, an object of the invention to obviate the disadvantages of the prior art.

It is another object of the invention to enhance the light output of tungsten halogen lamps.

It is yet another object of the invention to provide this enhanced light output at a reasonable cost.

These object are accomplished, in one aspect of the invention, by the provision of an electric lamp comprising an envelope defining a cavity, the cavity having a base and an opening defined by an edge opposite the base. A tungsten halogen capsule is positioned in the base, the capsule having a filament designed for operation at greater than 2700K; and a light transmissive lens closing the opening and bonded thereto by an adhesive, the lens comprising a suitable glass containing, by weight, 0.3 to 5% neodymium oxide.

By using a tungsten halogen capsule with a high coil temperature in combination with a lens and envelope sealed together by an adhesive, thus avoiding the inherent cost disadvantage of flame sealing the lens and body together, an effective, cost efficient lamp is produced. Also avoided is the high cost of the neodymium containing aluminosilicate tungsten halogen capsule.

**BRIEF DESCRIPTION OF THE DRAWINGS**

Fig. 1 is a graph illustrating the effectiveness of the invention over a range of neodymium addition; and

Fig. 2 is a diagrammatic view of a lamp employing the invention.

**BEST MODE FOR CARRYING OUT THE INVENTION**

For a better understanding of the present invention, together with other and further objects, advantages and capabilities thereof, reference is made to the following disclosure and appended claims taken in conjunction with the above-described drawings.

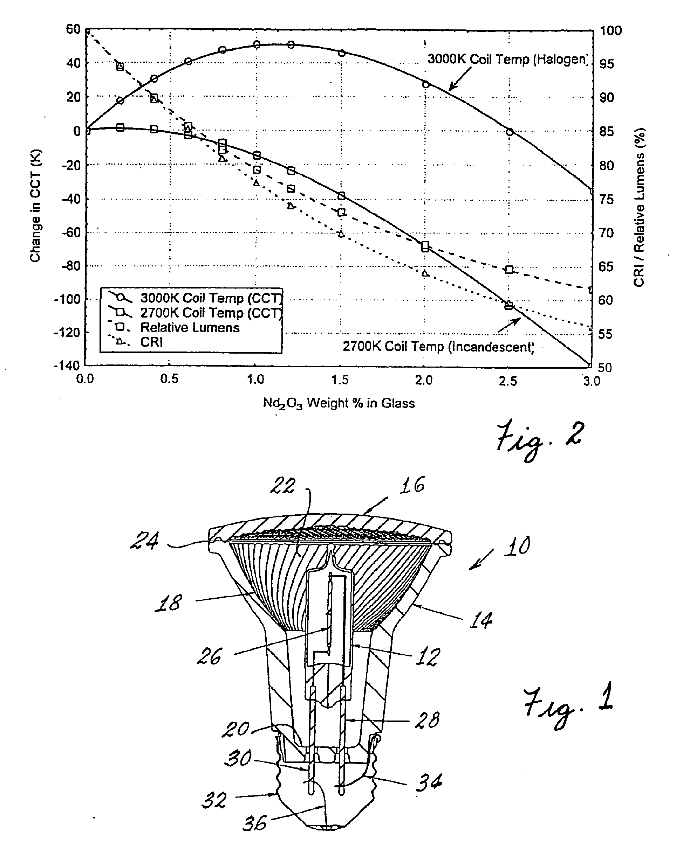

Referring now to the drawings with greater particularity, there is shown in Fig. 2 a PAR lamp 10 having a tungsten halogen capsule 12 mounted in a hard glass, pressed reflector 14. A hard glass lens 16 is bonded to the envelope 14 by an adhesive such as epoxy or silicone. More specifically, the envelope 14 defines a cavity 18 having a base 20 and an opening 22 defined by an edge 24, the opening 22 being opposite the base 20. The capsule 12 is mounted in the base 20 and contains a filament 26 that is designed for operation at greater than 2700K.

The capsule lead-ins 28, 30 project through the base 20 and are connected to the screw shell 32 by connectors 34, 36, as is known.

To provide the appropriate color correction, the lens 16 is preferably a borosilicate glass and contains between 0.3 and 5 weight percent neodymium.

In a preferred embodiment of the invention, the capsule 12 contains, in addition to the conventional halogen, about 85 weight percent xenon at a cold fill pressure of 5 bar. The lens 16 contains from 1 to 1.5 weight percent neodymium and the filament 26 is designed for operation at 3000K. The results of lamps so constructed and operated are shown in Fig. 1, which clearly shows the interaction between the lamp CCT and the filament temperature. As clearly shown therein, with filament temperatures below 2700K it is not possible to increase the CCT by the addition of neodymium oxide; however, with a filament temperature of 3000K, a 50K CCT increase is attainable. The effect of the neodymium oxide on efficacy and CRI is approximately independent of the source temperature and yet produces enhance emission in the blue and red regions of the spectrum.

Thus, there is provided a general service lamp with improved color output that operates at high efficacy and for a relatively lower cost than was heretofore achievable.

While there have been shown and described what are present considered to be the preferred embodiments of the invention, it will be apparent to those skilled in the art that various changes and modifications can be made herein without departing from the scope of the invention as defined by the appended claims.

## Claims

1. An electric lamp comprising:
an envelope defining a cavity, said cavity having a base and an opening defined by an edge opposite said base;
a tungsten halogen capsule positioned in said base, said capsule having a filament designed for normal operation at greater than 2700K; and
a light transmissive lens closing said opening and bonded thereto by an adhesive, said lens comprising a suitable glass containing, by weight, 0.3 to 5% neodymium oxide.

2. The lamp of Claim 1 wherein said capsule contains a fill including a halogen and 85 % by weight xenon.

3. The lamp of Claim 2 wherein said fill is at a pressure of at least 2.5 bar.

4. The lamp of Claim 1 wherein saisd light transmissive lens contains, by weight, from 1 to 1.5 % neodymium.

5. The lamp of Claim 1 wherein said filament is designed for operation at 3000K.

6. The lamp of Claim 1 wherein said suitable glass is for said lens is a borosilicate glass

7. A tungsten halogen lamp having enhanced emission in the red and blue regions of the spectrum, said lamp comprising
an envelope defining a cavity, said cavity having a base and an opening defined by an edge opposite said base;
a tungsten halogen capsule positioned in said base, said capsule having a filament designed for normal operation at greater than 2700K; and
a light transmissive lens closing said opening and bonded thereto by an adhesive, said lens comprising a suitable glass containing, by weight, 0.3 to 5% neodymium oxide.
